# EUROPEAN PATENT APPLICATION

(11) **EP 0 717 537 A1**
(43) Date of publication of application: **19.06.1996**
(21) Application number: 94480171.1
(22) Date of filing: 13.12.1994
(51) Int. Cl.: H04L 25/49, H04Q 11/04

(54) **Line coding for ATM**

(71) Applicant: International Business Machines Corporation, Armonk, N.Y. 10504 (US)
(72) Inventor: Calvignac, Jean, F-06610 La Gaude (FR); Verplanken, Fabrice, F-06610 La Gaude (FR); Haas, Lee C., Raleigh, NC 27606 (US); Noel, Francis E., Jr., Durham, NC 27707 (US)
(74) Representative: Therias, Philippe

(57) **Abstract**

A method is provided, in a network device (14) transmitting and receiving flows consisting of data information and command information, on a network transmission media (12) over which is used a first set of m-bit symbols, corresponding symbol-to-symbol to a second set of symbols internally used by said network device and being either non-data symbols or n-bit data symbols (n < m) for optimizing transmission and reception of said command information over said network transmission media. The method is characterized by:
- one particular m-bit symbol in the first set is non-imitable over said network transmission media, by any combination in any of said flows of any other symbols from the first set,
- any of said command information consists of a first particular non-data symbol followed or preceded by any of the n-bit data symbols from the second set, and
- said first particular non-data symbol from the second set corresponds to said particular non-imitable m-bit symbol from the first set.
The method is particularly fit, when m = 5, n = 4, and said particular non-imitable 5-bit symbol is "0 0 0 1 0", for an ATM 25Mbps data link.

## Description

The present invention relates to data communications in general, and to a complete 25Mbps ATM data link in particular.

There has been furious commercial and technical battles over the last years, as to the adoption by the data communications industry of a standard for a low cost, early available and of a speed sufficiently low so as to work over existing Category 3 unshielded twisted pairs (UTP-3), ATM data link.
It has been the object of US patent application 197,090 filed February 16, 1994 and assigned to IBM Corporation (referred further as "IBM patent application"), not published yet but a copy of which is joined to the present patent application, to propose such a low-speed ATM data link through the description of its physical layers, solving problems such as utilizing binary transmission, having a line signalling not exceeding 32 MBauds, insuring adequate number of line transitions, controlling unbalance of line signal polarities, etc... The IBM patent application teaches a system and method for encoding/decoding binary data for serial transmission over the physical medium of a link such as a 25Mbps ATM data link.
The taught data encoding/decoding is as follows:

| | Code Word | Data |
|---|---|---|
| 0 | 1 1 1 1 1 | 0 0 0 0 |
| 1 | 1 0 1 1 1 | 0 0 0 1 |
| 2 | 1 1 1 0 1 | 0 0 1 0 |
| 3 | 1 0 1 0 1 | 0 0 1 1 |
| 4 | 1 1 0 1 0 | 0 1 0 0 |
| 5 | 1 0 0 1 0 | 0 1 0 1 |
| 6 | 1 1 0 0 1 | 0 1 1 0 |
| 7 | 1 1 0 1 1 | 0 1 1 1 |
| 8 | 0 1 1 1 0 | 1 0 0 0 |
| 9 | 0 0 1 1 1 | 1 0 0 1 |
| A | 0 1 1 0 1 | 1 0 1 0 |
| B | 0 1 1 1 1 | 1 0 1 1 |
| C | 0 1 0 1 0 | 1 1 0 0 |
| D | (0 0 0 1 0) | 1 1 0 1 |
| E | 0 1 0 0 1 | 1 1 1 0 |
| F | 0 1 0 1 1 | 1 1 1 1 |
| X | 1 1 1 1 0 | Escape |

This encoding/decoding scheme features 16 data symbols, and 1 non-data symbol (Escape). Data nibble "D", or "1 1 0 1" is encoded into the only comma property word "0 0 0 1 0" (a word having "comma" property is one where the particular string representing the word can never be inadvertently imitated in the data stream on the link by any set of 5 consecutive bits found in any sequence of valid data symbols; this is also called "non-imitability" property).

In the IBM patent application (cf: its p.20 and 21), is also envisaged the combination of either a data symbol or even a first Escape symbol, followed by a second Escape symbol, to provide for 17 commands under the form of octet-long sequences on the data link.
Command information needed to be carried on the link may for example be for purpose of:
- cell delineation, i.e. explicit indication in the data stream of the start of an ATM cell, for purpose of synchronization on a receiving side,
- 8kHz marker, in order to allow compatibility with Integrated Services Digital Network (ISDN) standard, or other networks based on Time Division Multiplexing (TDM),
- void information, for example for filling-in unused data bytes,
- Xon/Xoff commands for stopping or restarting a flow incoming on a data link,
- other line management commands....

An encoding/decoding scheme, improved over that of the IBM patent application, for optimizing the conveying of command information on the data link, and particularly fit for application in a 25Mbps ATM data link, was needed.

Available prior art encoding/decoding techniques included:
- US patent 4,987,572, assigned to Advanced Micro Devices Corp defines a 4b/5b code with good line efficiency as compared to Differential Manchester encoding available in Ethernet and Token-Ring Local Area Networks (LANs). 16 data symbols along with 9 non-data symbols which can be used as command information are provided as follows:

| | Code Word | Data |
|---|---|---|
| 0 | 1 1 1 1 0 | 0 0 0 0 |
| 1 | 0 1 0 0 1 | 0 0 0 1 |
| 2 | 1 0 1 0 0 | 0 0 1 0 |
| 3 | 1 0 1 0 1 | 0 0 1 1 |
| 4 | 0 1 0 1 0 | 0 1 0 0 |
| 5 | 0 1 0 1 1 | 0 1 0 1 |
| 6 | 0 1 1 1 0 | 0 1 1 0 |
| 7 | 0 1 1 1 1 | 0 1 1 1 |
| 8 | 1 0 0 1 0 | 1 0 0 0 |
| 9 | 1 0 0 1 1 | 1 0 0 1 |
| A | 1 0 1 1 0 | 1 0 1 0 |
| B | 1 0 1 1 1 | 1 0 1 1 |
| C | 1 1 0 1 0 | 1 1 0 0 |
| D | 1 1 0 1 1 | 1 1 0 1 |
| E | 1 1 1 0 0 | 1 1 1 0 |
| F | 1 1 1 0 1 | 1 1 1 1 |
| Q | 0 0 0 0 0 | Line state |
| I | 1 1 1 1 1 | Line state |
| H | 0 0 1 0 0 | Line state |
| J | 1 1 0 0 0 | Starting delimiter |
| K | 1 0 0 0 1 | Starting delimiter |
| L | 0 0 1 0 1 | Starting delimiter |
| T | 0 1 1 0 1 | Ending delimiter |
| R | 0 0 1 1 1 | Control indicator |
| S | 1 1 0 0 1 | Control indicator |

The comma property can there only be achieved by the use of 2 contiguous symbols J and K. This is due to the fact that 16 data symbols have to be defined likewise, but in addition, 9 different non-data symbols are used to carry 9 different command information (the remaining symbols cannot be used because they do not provide for enough or adequate 0/1 transitions on the data link, so as to allow correct phase-locked loop handling, and/or "disparity" on the receive side).
In that scheme, only 9 different commands can be exchanged on the data link, and only one command "J_K" has the symbol alignment property.

This encoding/decoding scheme has been the base for FDDI-I technology.
- The ATM Forum has also chosen the previous encoding/decoding scheme as the base for its "Physical Layer for 100MBps multimedia fiber interface" (ATM Forum UNI Specifications, V3.0, referred further as "ATM UNI"), but assigning differently some of the 9 non-data symbols to allow exchange of ATM cells on the data link.
- The American National Standard Institute (ANSI) has also chosen the same encoding/decoding scheme, assigning some of the 9 non-data symbols differently yet, in order to exchange on the data link synchronous flows of information compatible with the Integrated Services Digital Network (ISDN). See "FDDI Hybrid Ring Control", ASC X3T9.5 Rev.5, April 1989. This scheme is further referred to as "FDDI-II".

None of these prior art techniques teaches the present invention, nor brings about the optimization of the conveying of command information on the data link, as in the present invention.
According to the invention, there is provided an encoding/decoding scheme where all commands on the data link contain at least the one symbol having the comma property (non-imitability).
More particularly, all commands according to the invention are formed by the combination of a symbol having the comma property (non-imitability) and set to be the Escape symbol, together with one of the 16 (data) + 1 (Escape) symbols, thus also providing for 17 possible commands.
Even more particularly, the invention includes 〈 Claim 1 〉.

The invention will be better understood from the following detailed description read in conjunction with the following schematics:
**Fig.1** depicts a network comprising a network device utilizing the method and system of the present invention.
**Fig.2** depicts, in block diagram form, one embodiment of the encoder and the transmitting media interface, of the present invention.
**Fig.3** depicts, in block diagram form, one embodiment of the decoder and the receiving media interface of the present invention.
**Fig.4** depicts a LAN dataflow byte-to-byte compatible according to one aspect of the invention, to a WAN SONET/SDH dataflow.

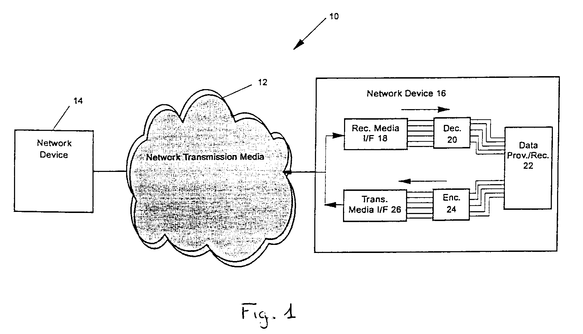

**Fig.1** illustrates in block diagram form a communications network 10 comprising a network transmission media 12 and network devices 14 and 16. Transmission media 12 can either be a shared media, or an internally switched network/backbone. Network device 16 is shown in slightly greater detail as having a receiving media interface 18, a decoder 20, a data provider/receiver 22, an encoder 24 and a transmitting media interface 26.

The receiving media interface 18 acts to interface the circuitry of network device 16 to the network 12. It performs functions such as receiving a transmitted bit stream, recovering the clock of the transmitting unit so that the receiver may synchronize with the transmitter, and forwarding the received data stream and clock to the decoder 20. In addition, the receiving media interface 18 converts the received data from the media-level encoding scheme, for example nonreturn-to-zero inversion (NRZ(I)), to NRZ form and further from a serial form to a 5-bit format.

The decoder 20 receives the 5-bit word from the receiving media interface (as shown by the direction arrow) and decodes the word to generate a 4-bit nibble plus a non-data bit. This 4-bit nibble and non-data bit are forwarded to the data provider/receiver 22.

The data provider/receiver 22 is merely providing binary data to be transmitted across the network or receiving binary data which was conveyed to it via the network. In the present example, it is configured to receive and transmit binary data in a 4-bit parallel format plus an additional non-data bit. Furthermore, the data provider/receiver 22 is merely a logical representation of any unit wishing to send data over network transmission media 12 using network device 16. It may actually be any communication device, possibly receiving data on one side in one format and reformatting it into the 4-bit nibble plus escape format on the other.

Encoder 24 receives the 4-bit nibble and non-data bit from the provider/receiver 22 and encodes it to a 5-bit word to be conveyed to the transmitting media interface 26. The encoder 24 performs, in effect, the opposite function of decoder 20.

The transmitting media interface 26 receives the 5-bit word (as shown by the direction arrow) and converts from a parallel into a serial form, converts it for example from NRZ to NRZ(I) form, and provides the physical media interface through the use of line drivers and the like.

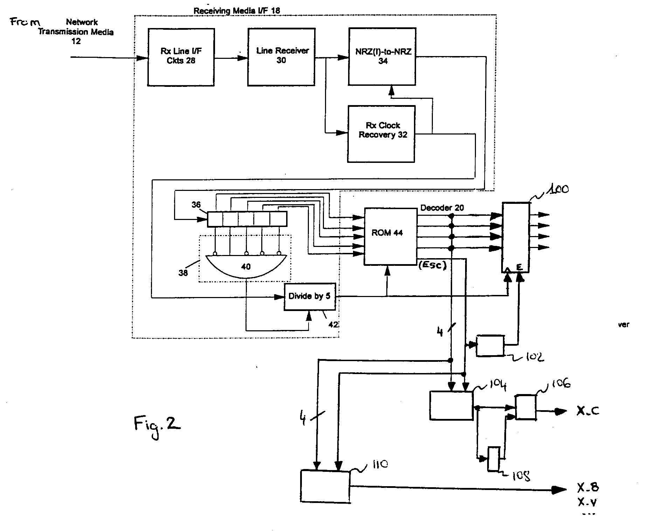

**Fig.2** illustrates the receiving media interface 18 and the decoder 20 in greater detail. The receiving media interface 18 receives the serial data stream using interface circuitry ("Rx Line I/F Ckts" 28 and line receivers 30) conforming to the physical media protocol used. The interface circuitry converts the data stream into a form usable by the remainder of the system.

The received data stream is conveyed to both receiver clock recovery circuitry 32 and NRZ(I)-to-NRZ circuitry 34. The receiver clock recovery circuitry 32 recovers the transmitter clock. A common method of clock recovery employs phase-lock loop techniques. The transmitter clock is used to synchronize the remaining portion of the receiver circuitry. The NRZ(I)-to-NRZ circuitry 34 converts the NRZ(I) code to an NRZ form.

The received bit clock is forwarded to both a deserializer 36 and a :5 circuit 42. The :5 circuit 42 divides the received bit clock by 5 to synchronize the receiver for 5-bit words.

The converted data stream is conveyed from the NRZ-to-NRZ(I) circuitry 34 to the deserializer 36. The data stream is clocked into the deserializer 36 using the received bit clock. The deserializer 36 merely changes the received data from serial to parallel form. The parallel form data (in 5-bit format) is conveyed to the decoder 20 and to a comma detect 38.

The comma detect 38 examines the bit stream in the form a 5-bit words, the bits individually cycling through the deserializer 36. In the example shown, a 5-port AND gate 40 is used where the 5-bit word is "0 0 0 1 0". This is the 5-bit word having NRZ(I) comma property. As was discussed above, this 5-bit string will appear no where else in the data stream and is unique only to this word. 5-bit strings representing each of the other words in the preferred encoder pattern set can appear in the data stream even where the particular 5-bit word is not transmitted. For instance, two bits at the end of one word together with the first three bits of another word may form one of the specified 5-bit words in the encoder pattern set. That can never happen with the NRZ(I) comma property word. Thus, the NRZ(I) comma property word is able to synchronize the receiver for receiving the transmitted 5-bit words. The output of the comma detect 38 is input to preset the :5 circuit 42. This synchronized receiver clock is conveyed to the decoder 20.

Decoder 20 receives the 5-bit words, synchronized by the receiver clock, and decodes the words in accordance with the encoding/decoding pattern of the invention, as shown TABLE 1 below:

**TABLE 1**

| | Code Word | Data |
|---|---|---|
| 0 | 1 0 1 0 1 | 0 0 0 0 |
| 1 | 0 1 0 0 1 | 0 0 0 1 |
| 2 | 0 1 0 1 0 | 0 0 1 0 |
| 3 | 0 1 0 1 1 | 0 0 1 1 |
| 4 | 0 0 1 1 1 | 0 1 0 0 |
| 5 | 0 1 1 0 1 | 0 1 0 1 |
| 6 | 0 1 1 1 0 | 0 1 1 0 |
| 7 | 0 1 1 1 1 | 0 1 1 1 |
| 8 | 1 0 0 1 0 | 1 0 0 0 |
| 9 | 1 1 0 0 1 | 1 0 0 1 |
| A | 1 1 0 1 0 | 1 0 1 0 |
| B | 1 1 0 1 1 | 1 0 1 1 |
| C | 1 0 1 1 1 | 1 1 0 0 |
| D | 1 1 1 0 1 | 1 1 0 1 |
| E | 1 1 1 1 0 | 1 1 1 0 |
| F | 1 1 1 1 1 | 1 1 1 1 |
| X | (0 0 0 1 0) | Escape |

These code words have the requisite transmission properties when encoded in NRZ(I) (or another inversionary, or differential, type of media-level encoding scheme).

The decoder 20, which may be a ROM 44 or logic circuitry, decodes the 5-bit code words into the 4-bit data nibbles understandable by the data provider/receiver 22. The decoded 4-bit nibbles plus the non-data bit is conveyed to register 100. The non-data bit is the Escape bit corresponding, according to the invention, to the 5-bit word having the non-imitability property.

Register 100 is used to present only valid data symbols to the data provider/receiver 22. It is clocked by the output of the :5 circuit 42, and enabled by the output of enable circuit 102. Enable circuit 102 determines whether or not a valid 4-bit nibble is present at the output of ROM 44 by sampling the non-data (Escape) bit: if the latter bit is activated, enable circuit 102 disables register 100 for the time duration of the Escape symbol plus the following data symbol, thus allowing to filter all commands from the data flow before transmittal to data provider/receiver 22.

Circuits 104, 106 and 108 are used for cell delineation: X_C detector, for example featuring a technique similar to that of the deserializer 36 combined with the comma detect 38, detects an Escape nibble followed by a 4-bit data nibble "4", to indicate via OR 106, a cell start to data provider/receiver 22, and reset a 106-nibble counter 108. Indication of a cell start to data provider/receiver 22 results therefore either from an activation of X_C detector 104, or the expiration of 106-nibble counter 108.
106-nibble counter 108 could also be omitted in a receiving network device, in which case the latter would have to be interconnected only with other network devices supporting the X_C command inbetween every cell.
X_S detector 110 is an example of one of several detectors that can be hooked in parallel to the output of ROM 44 to indicate to the data provider/receiver 22 that an Escape nibble followed by a particular one of the 17 possible 4-bit nibbles according to the invention, has been detected in the dataflow. Detection technique in X_S detector is identical to that of X_C detector.

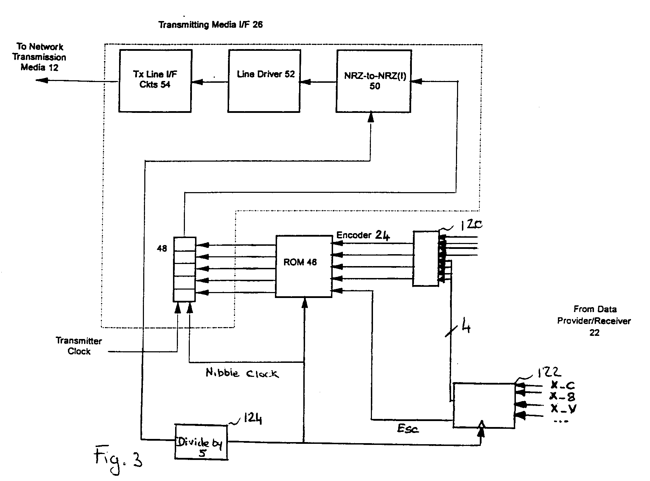

In the other data flow direction, when the data provider/receiver 22 wishes to transmit data over the network 12, 4-bit nibbles plus a non-data bit are conveyed to encoder 24. Encoder 24 is illustrated in block diagram form with respect to **Fig.3**.

As can be seen, the encoder 24 receives the 4-bit nibbles and the Escape bit from a multiplexor 120. The encoder 24 encodes each of the 16 received 4-bit nibbles into its corresponding 5-bit word in accordance with TABLE 1 above, using for example a look-up table in ROM 46. The actual line signal on the network transmission media 12 for each 5-bit word, can be found respectively with respect to TABLE 2 of the IBM patent application (see its p.19). The Escape bit is encoded into a 5-bit word so that 17 5-bit words are defined for the corresponding 16 data nibbles and the single Escape bit. As can be seen, Escape is encoded to the NRZ(I) comma property word "0 0 0 1 0".

The code word after NRZ(I) translation ("0 0 0 1 0") has NRZ(I) comma property because this sequence of bits will never occur as any part of any combination of other code words. The NRZ(I) comma property allows a receiver to immediately acquire code word synchronization by a simple 5-bit pattern match (as shown in the comma detect 38), whenever the word is used.

The output of the encoder 24 (5-bits) is conveyed to the transmitting media interface 26. The parallel data word is converted into serial form by a serializer 48 which merely puts the 5-bit word in serial format. The serial data stream is clocked out of the serializer 48 by a transmitter clock (which is 5 times the nibble clock which clocks the data into the serializer 48, obtained by a :5 circuit 124) to the NRZ-to-NRZ(I) circuitry 50 which converts the NRZ form of data stream to the NRZ(I) form for transmission over the network 12. Line driver 52 and Tx Line I/F Ckts 54 prepare the data stream for the actual physical interface so that it has proper voltage values, output impedance, etc.

Multiplexor 120 feeds ROM 46 with either dataflow from the data provider/receiver 22, or commands from a command generator 122 clocked by the nibble clock.
When a command information needs be imbedded in the flow, data provider/receiver 22 stops providing data to multiplexor 120 and activates command generator 122 to generate one of the supported commands (X_C, X_8, X_V, etc...); command generator 122 activates its Escape bit output in a first nibble time, then in a second nibble time, provides multiplexor 120 with the 4-bit nibble corresponding to the command (4, 8, etc...).

Command information is conveyed in the present invention, by the combination of the first Escape symbol, together with one of the 16 data symbols, or even another second Escape symbol, providing for 17 possible commands. But unlike what is taught in the prior art, the Escape symbol is the one symbol from the set having the comma property.
In the preferred embodiment, the first Escape symbol precedes the other 17 possible data or second Escape symbols. However, it is within the reach of the person skilled-in-the-art to design a system for handling a configuration where the 17 possible data or second Escape symbols would precede in the dataflow the first Escape symbol.

By associating the comma property with the Escape symbol, is thus given to all of the 17 commands the property of being equivalent to an octet (2 symbols) containing symbol alignment information: indeed, at least one symbol of the latter octet having the comma property, a receiver at the data link can synchronize receiving circuitry with any of the commands and then, synchronize (or resynchronize in case of loss of synchronization) to the symbol boundary. By limiting the command information to 1 byte, is eased the utilization of commands for most of the systems which are byte-oriented, providing a maximum of 17 different command information fitting the requirements for controlling and managing the transmission media at the data link.
The well-defined and bounded command format according to the invention promotes easy interoperability at the data link level: the task, for all communication equipments attached to that link, is to remove the 1-byte command on the receive side. Once this is done, the equipment can decide to use the commands or not: this allows for example to interconnect hubs and work-stations supporting different levels of functions and different uses of commands.

Encoding/decoding according to the present invention allows for example the following functions/commands to be implemented on the data link, alone or in any combination with each other (such a list not to be construed in a limited sense):

### Cell delineation

Cell delineation is permitted by a command X_C which has, like any other command according to the invention, the symbol alignment property. In a preferred embodiment, X_C is made up of the Escape symbol followed by data symbol 4.

All 53-byte-long ATM cells can therefore be separated on the data link by a X_C command as follows: 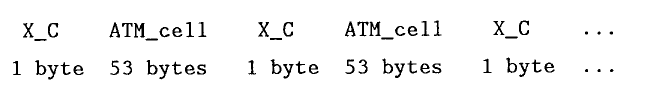
This makes possible a resynchronization, by a receiving device on the data link, at each ATM cell, which thus permits a good robustness to the link; a short bursty noise for example will only result in the loss of one ATM cell, with a recovery possible at the next one.
The overhead for achieving such robustness is 1/ (53 + 1).

This compares favorably with the overhead/robustness ratio that could be obtained in the case of ATM UNI.
To achieve the same robustness in the ATM UNI, it would be necessary to have a 2 byte J_K,T_T inbetween all ATM cells with a higher overhead of 2 / (53 + 2): 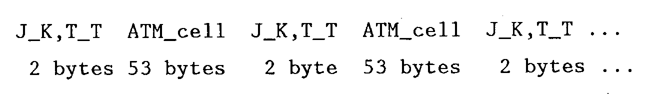
Otherwise, having almost the same overhead of (1 + n) / (53 * n + 1 + n), by: 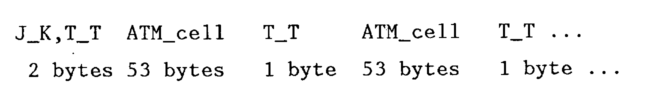
i.e. have a 2 byte J_K,T_T every n ATM_cell only, would result in a less robust quality of data link with a resynchronization consequently permitted every n cells only.

A receiver on the data link can easily remove the cell delineation command X_C from a data flow.
Therefore, interoperability is ensured between an emitting network device imbedding X_C commands inbetween every cell, together with both receiving network devices using each of such commands to delineate cells, and receiving network devices using only those commands occasionally, being equipped with a multiple cell counter.
It is also an option for an emitting network device not to imbed X_C commands inbetween every cell.

More generally, there is no need for a network device to support the full set of commands as described in the present invention, to be fully compatible with those network devices supporting the full set.

### 8 kHz marker

This is achieved through a X_8 command, which has, like any other command according to the invention, the symbol alignment property, and is removed from the data flow by a receiver when connected to the data link.
In a preferred embodiment X_8 is made up of the Escape symbol followed by data symbol 8.
Due to the clocking difference in a TDM and ATM data links, the X_8 command can appear anywhere in the data flow, i.e. at ATM cell boundary, or within a cell: 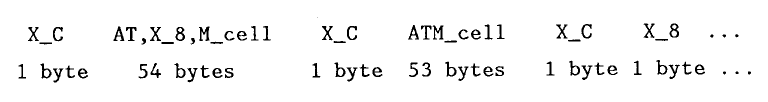
Should the same 8 kHz marker capability have to be available in the ATM UNI, it would be necessary to imbed a L_L dual symbol in the dataflow, with a much larger overhead (for an equally robust synchronisation): 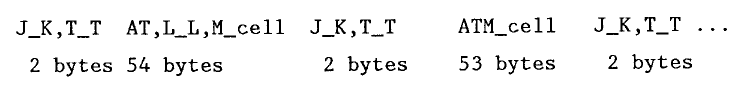
FDDI-II proposes a system to pass a 8kHz marker on a data link where J_K, being the only symbol having the symbol alignment property, is also used as 8kHz marker. Thus, a receiving workstation having no ISDN nor any real time running applications, must still differentiate between those J_K symbols being 8kHz markers and those not being 8kHz markers, i.e. have a knowledge of the data framing structure on its attached link.
This is not required according to the invention: a receiver on the data link can easily remove the 8kHz marker command X_8 from a data flow.
Therefore, interoperability is ensured between an emitting network device imbedding X_8 commands, and both receiving network devices supporting the 8kHz marker function and running real time applications, together with both receiving network devices not supporting the 8kHz marker function or not currently running a real time application.

### Interoperability with SONET/SDH format at byte level

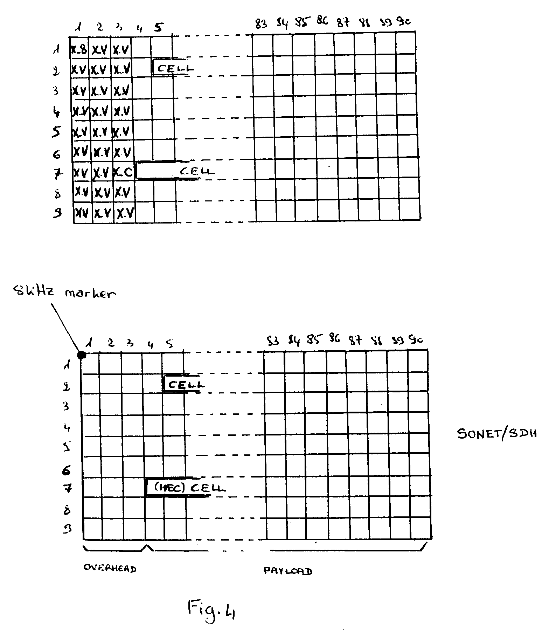

SONET/SDH format is based on synchronous frames (8kHz synchronous) containing both overhead bytes for link maintenance, and payload bytes for conveying ATM cells.
Each SONET frame is logically thought of as a two-dimensional chunk of bytes, with 90 columns and 9 rows. The first 3 columns (27 bytes) are reserved for transporting overhead information, while the other columns are the payload. Since the SONET/SDH frame delineation (8kHz marker) does not use a command symbol (the position in the frame determines whether a cell "conveys data or command), and the ATM cell delineation does not either, there is no code with command symbol. Entity delineation in that context consists of hunting of specific data patterns, and counting the passing bytes; frame delineation is performed by hunting of a specific character (SONET/SDH), or cell delineation by hunting of HEC (ATM).
The above described format is mostly used in Wide Area Networks (WANs), where the overhead bytes are used to convey long distance link management and monitoring. This format is usually not supported in Local Area Networks (LANs).
The present invention further allows LAN equipment to be compatible with WAN equipment, the translation of data flows between the two being done at byte level, thus minimizing complexity and cost.
Having 1-byte commands, together with the property of having symbol alignment with any command, allows on the LAN side, to define frames with the same number of bytes as the SONET/SDH frames in use on the WAN side. A command X_V has been introduced to fill-in the equivalents on the LAN side, of the SONET/SDH overhead bytes.
In a preferred embodiment X_V is made up of the Escape symbol followed by data symbol F.
Thus, a byte-to-byte automatic and simplified translation can be achieved between the LAN and WAN sides: X_V commands fill-in bytes on the LAN side corresponding to overhead bytes on the WAN side, except for frame delineation performed by X_8 commands, and cell delineation by X_C commands for those cells immediately coming after LAN bytes corresponding to WAN overhead bytes. This is further illustrated with respect to **Fig.4.** There is depicted a LAN dataflow byte-to-byte compatible to a WAN SONET/SDH dataflow.
In the SONET/SDH dataflow are given examples of an ATM cell comprising an HEC field on the 7th row of the frame (and this cell is synchronized to in a receiving network device, by a HEC hunting operation), or an ATM cell in the 2nd row synchronized to by a byte counting operation in a receiving network device.
Corresponding cells are shown in the dataflow above; the cell corresponding to that on the 7th row is preceded by an X_C command. The other cell requires byte counting capability on the side of a receiving device. All bytes corresponding to SONET/SDH overhead are filled with X_V commands, except for the first byte which an X_8 command for frame delineation purpose.

### Xon/Xoff traffic management

This is a useful function for when it is desired to have the capability of stopping or restarting part or all of data traffic incoming on a link.
A data flow complete control may be desired, in which case X_off and X_on commands are introduced. Like all other commands in the present invention, they can appear anywhere in the data flow, and easily be removed from it by a network receiving device.

In one embodiment of the invention, four traffic management are provided, allowing to control both incoming ATM Reserved Bandwidth and Non Reserved Bandwidth flows for a better tuned traffic management.
Other traffic management commands could also be provided within the limits of the 17 commands according to the invention, for controlling other ATM traffic flows (Cell Loss Priority, etc...).

Like for any other command according to the invention, interoperability is ensured between network devices supporting in full, partly or not at all the above set of traffic management commands.

### Other commands

As permitted by the 17 commands according to the invention, other functions could be supported by the invention as will appreciate the person skilled-in-the-art, such as Link Failure Indication, Link Fault Management, Remote Wrap Control, etc...
This is a definite advantage over prior art techniques (ATM UNI, FDDI-II, etc...) where a much more limited set of commands is available.

According to the invention, an extended set of 256 commands could even be made available, by defining a command by an Escape nibble combined with three other 4-bit data nibbles.

## Claims

1. A method, in a network device (14) transmitting and receiving flows consisting of data information and command information, on a network transmission media (12) over which is used a first set of m-bit symbols, corresponding symbol-to-symbol to a second set of symbols internally used by said network device and being either non-data symbols or n-bit (n < m) data symbols, said method for optimizing transmission and reception of said command information over said network transmission media and being characterized in that:
- one particular m-bit symbol in the first set is non-imitable over said network transmission media, by any combination in any of said flows of any other symbols from the first set,
- any of said command information consists of a first particular non-data symbol ("X") followed or preceded by any of the n-bit data symbols from the second set, and
- said first particular non-data symbol from the second set ("X") corresponds to said particular non-imitable m-bit symbol from the first set.

2. The method of claim 1, characterized in that m = 5, n = 4, and said particular non-imitable 5-bit symbol is "0 0 0 1 0".

3. The method of claim 1 or 2, characterized in that any of said data information comprises ATM cells.

4. The method of claim 3, characterized in that said command information comprises said first particular non-data symbol ("X") followed or preceded by a second particular n-bit data symbol from the second set ("C"), at each boundary of said ATM cells, for cell delineation over said flows.

5. The method of claim 3 or 4, characterized in that said command information comprises said first particular non-data symbol ("X") followed or preceded by a third particular n-bit data symbol from the second set ("8"), within or at boundary of certain of said, ATM cells, for synchronous signalling over said flows.

6. The method of claim 5 when dependent on claim 4, characterized in that said command information further comprises said first particular non-data symbol ("X") followed or preceded by a fourth particular n-bit data symbol from the second set ("V"), and in that said "X_V" command is used for filling-in any data information in said flows corresponding to SONET/SDH overhead, except for cell delineation by said "X_C" command for those ATM cells immediately following in said flows any data information corresponding to SONET/SDH overhead, and for synchronous signalling by said "X_8" command for data information in said flows corresponding to the first SONET/SDH overhead.

7. The method of any of the claims 3 to 6, characterized in that said command information comprises said first particular non-data symbol ("X") followed or preceded by fifth and sixth particular n-bit data symbols from the second set ("On", "Off"), for stopping or restarting the ATM Reserved Bandwidth from said receiving flow.

8. The method of any of the claims 3 to 7, characterized in that said command information comprises said first particular non-data symbol ("X") followed or preceded by seventh and eighth particular n-bit data symbols from the second set, for stopping or restarting the ATM Non Reserved Bandwidth from said receiving flow.

9. A system comprising a network device (14) transmitting a flow consisting of data information and command information, to a receiving network device (16), over a network transmission media (12), said system comprising at said transmitting device (14):
- encoding means (46, 48, 50, 52, 54) for encoding either non-data symbols, or n-bit data symbols from a second set, internally used by said transmitting network device, into a first set of respectively corresponding m-bit (n < m) symbols being used over said network transmission media, said first set including one particular m-bit symbol being non-imitable over said network transmission media,
- means (22, 120) for inputting to said encoding means n-bit data symbols from the second set corresponding to data information, and
- means (22, 122, 120) for inputting to said encoding means for command information, a particular non-data symbol ("X") followed or preceded by any of the n-bit data symbols from the second set, said particular non-data symbol from the second set ("X") being encoded by said encoding means into said particular non-imitable m-bit symbol from the first set.

10. The system of claim 9, characterized in that it further comprises at said receiving network device (16):
- decoding means (28, 30, 32, 34, 44) for decoding said first set of m-bit symbols, into said respectively corresponding particular non-data symbol ("X") and n-bit data symbols from the second set, internally used by said receiving network device,
- means for detecting (44, 36, 38) those n-bit symbols being data symbols corresponding to data information, and said particular non-data symbol ("X"),
- means for removing (44, 102) from said flow any said particular non-data symbol ("X") and the following or preceding n-bit data symbols from the second set, and reporting (104, 106, 108, 110) the corresponding command information.
